# EUROPEAN PATENT APPLICATION

(11) **EP 1 031 475 A2**
(43) Date of publication of application: **30.08.2000**
(21) Application number: 00102134.4
(22) Date of filing: 07.02.2000
(51) Int. Cl.: B60R 21/32

(54) **Protection system for rear impact crashes**

(30) Priority: 26.02.1999 US 258728
(71) Applicant: Breed Automotive Technology, Inc., Lakeland, Florida 33807-3050 (US)
(72) Inventor: Keller, Gerald J., Macomb County, Michigan 48316 (US); Frech, Henry D., Washington, Michigan 48094 (US); Wilkins, Michael D., Roseville, Michigan 48066 (US); Sikorski, Jeffrey, Sterling Heights, MI 48310 (US); Mazur, Joseph F., Washington, Michigan 48094 (US)
(74) Representative: Gislon, Gabriele

(57) **Abstract**

A vehicle occupant protection system has a sensor (600, 620) for detecting an impending or actual rear impact. Another sensor (300, 302) determines the position of the vehicle occupant subsequent to the rear impact in relation to structures within a passenger compartment. Airbags (208, 208a, 500, 502, 504) provide an inflatable protective restraint for the vehicle occupant in response to the position of the vehicle occupant. A controller (302) generates a control signal to activate the airbags.

## Description

The present invention generally relates to airbag devices for motor vehicles and more particularly to an airbag system for protecting a vehicle occupant during a rear impact crash.

The present invention provides improved rear impact protection for a vehicle occupant by employing a pre-impact sensor. An alternative embodiment provides protection to vehicle occupants in secondary impacts with interior portions of the vehicle during a crash.

US 5 782 529 teaches a system to protect an occupant during a rear impact crash of a vehicle.

Accordingly the invention provides a system for protecting a vehicle occupant in a rear impact crash according to the characterising portion of claim 1.

### Brief Description of the Drawings

FIG. 1 is a plan of a vehicle seat and seat belt system.
FIG. 2 is a cross-sectional view of a driver side airbag system incorporating the present invention as well as a portion of the passenger compartment.
FIG. 3 shows a passenger side airbag system and rear seat system.
FIG. 4 illustrates a rear impact crash for an unrestrained vehicle occupant.
FIG. 5 shows a rear impact crash for a restrained vehicle occupant.
FIG. 6 shows a rear impact crash for a restrained vehicle occupant seated in a seat having a rear impact cushion.
FIG. 7 is a top, interior plan view of a vehicle.
FIG. 8 is a safety system control and actuation algorithm for the proposed invention.
FIGS. 9 and 10 show other control algorithms.

### Detailed Description of the Invention

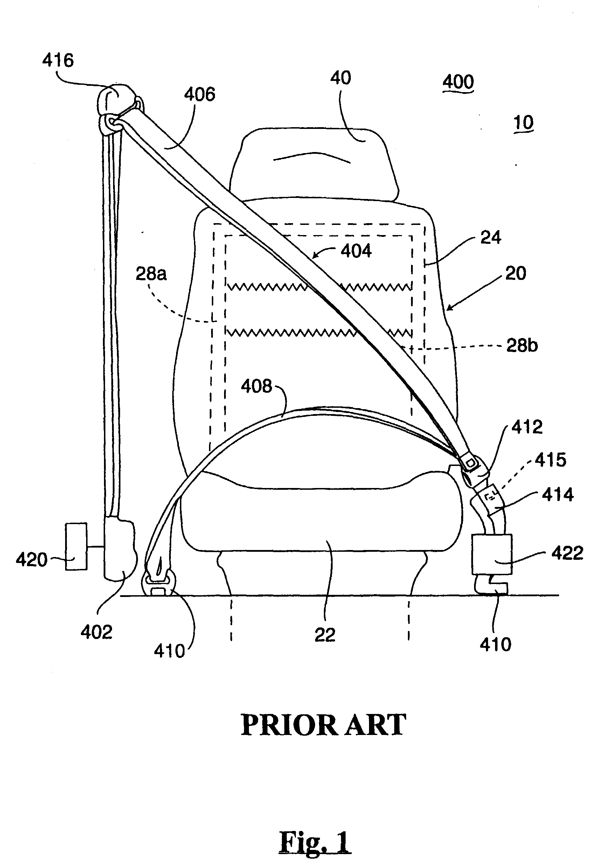

Reference if briefly made to FIGS. 1 - 3 which illustrate a portion of system 10 for protecting a vehicle occupant in a rear impact crash according to the present invention showing a seat belt system 100 as well as the construction of a typical automotive vehicle seat 20.

The vehicle seat includes a seat cushion 22 and seat back 24. Both the seat cushion and seat back are constructed using an underlying support frame 26 covered by a foam 32 and an outer layer of protective or decorative material 34 such as woven cloth or leather. With regard to the seat back 24, a support frame 26 is shown having vertical posts 28a, 28b. Interconnecting the posts 28a, 28b are a plurality of horizontal supports or springs that provide support for the foam 32 and covering material 34. The seat back and seat cushion may be of integral construction or hinged relative to each other as is typically the case with two-door vehicles. The headrest may be movable relative to the back 24 or an integral non-movable part thereof.

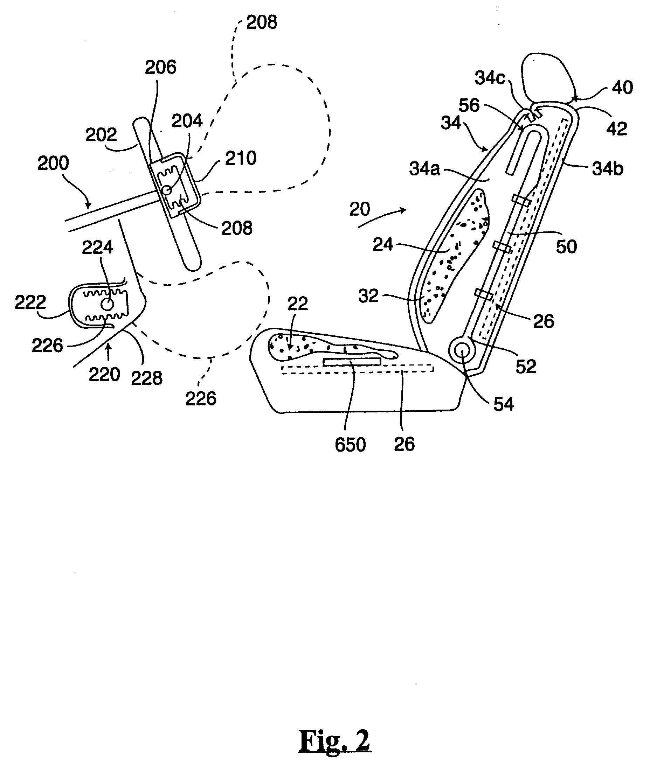

FIG. 2 illustrates a cross-sectional view of an automotive seat 20 incorporating a rear protection airbag as well as a side view of a portion of the passenger compartment. The seat 20 is located in front of a driver side airbag system 200. A seat cover material 34 covers the seat. The seat cover material may include a front piece 34a and a rear piece 34b that are sewn together at a seam 34c that extends horizontally across the top 42 of the seat back 24. An airbag 50 is situated between the foam 32 the frame 26. The lower portion 52 of the airbag is operatively connected to an airbag inflator 54 of known construction. In the embodiment illustrated in FIG. 2, the top portion 56 of the airbag 50 is folded over or tucked into itself so that it fits within the contour of the seat. The purpose of this construction will be apparent from the description below. The driver side airbag system 200 is installed within a steering wheel 202 and includes an inflator 204, housing 206, airbag 208 and deployment cover 210 all of which are known in the art. The system may include a knee protection system 220 also of known variety including a housing 222, inflator 224, airbag 226 and deployable cover 228.

Upon inflation of the airbag 208 it is positioned in front of the vehicle occupant to protect the upper torso and head. The airbag 226 prevents the vehicle occupant from submarining and when inflated pushes rearward on the knees or lower legs of the vehicle occupant. The time at which the airbag 208 is inflated is dependent on the control algorithm used.

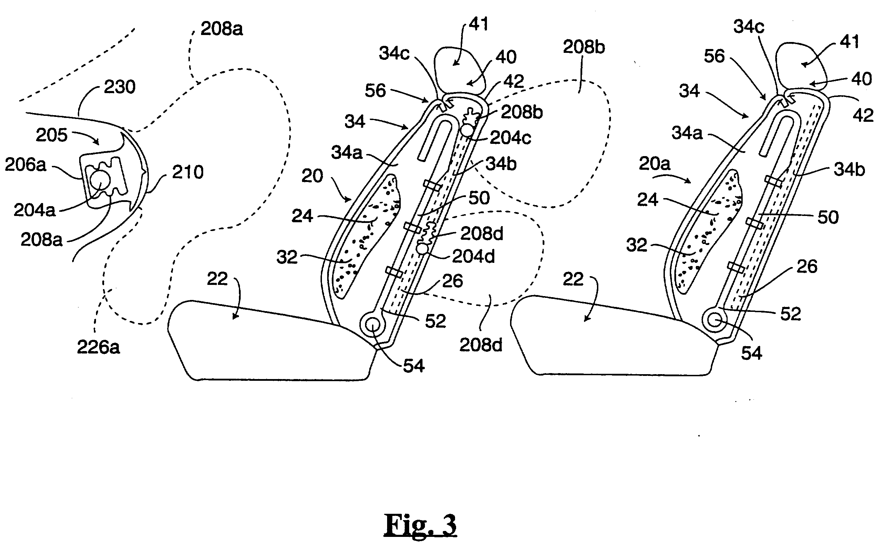

FIG. 3 shows the interior of the passenger compartment and illustrates the front passenger seat and one of the rear seats of a typical vehicle. Here the front seat passenger (not shown) will be protected by an airbag deployed from an airbag module 205 comprising an inflator 204a, housing 206a, airbag 208a and deployment cover 210a, all of which are known in the art. The module 205 is located within a portion of an instrument panel 230. The cover 210a will often close an opening (through which the airbag deploys) in the instrument panel 230. A separate knee protection system 220 can also be incorporated herein but for the purpose of generality the airbag 208a is shown with an inflatable appendage or knee portion 226a which serves to protect the legs of the vehicle occupant.

The construction of the rear seat 20a is substantially the same as the front seat 20. FIG. 3 shows an optional feature of the present invention wherein the rear of the front seat 20 includes an airbag 208b to protect the head and chest of a vehicle occupant seated in the rear seat 20a. An additional inflator 204c inflates this airbag, shown in a stored, folded, and an inflated condition. Similarly the front seat 20 may include a knee protection system. This knee protection system can include a separate inflator 204d and airbag 208d (similar to that shown in FIG. 1) or the airbag 208d can be fabricated with the integral knee portion 226 as discussed above. There are many other frontal and knee protection combinations which can be used.

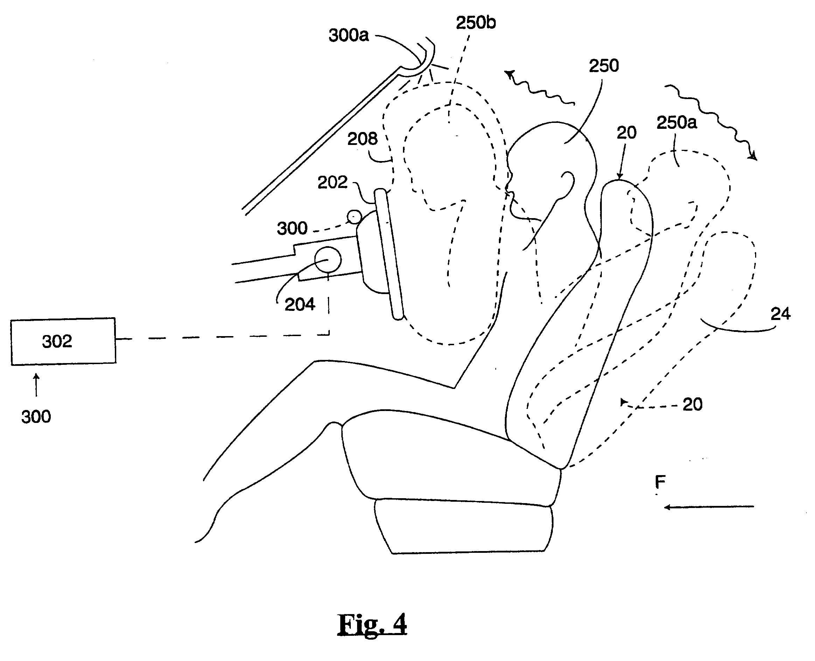

FIG. 4 illustrates the operation of the present invention during a rear impact crash and shows a vehicle occupant not restrained by a seat belt system. During a rear impact crash a vehicle will be accelerated forward by the force F created by, for example, another vehicle which crashes into the rear of the occupied vehicle. As a result of the impact the vehicle occupant 250, such as the driver, will move rearward (see 250a) into the seat back 24. The degree to which the seat back is moved or deflected rearward will depend upon the degree of severity of the crash and the strength and design of the seat. Subsequently, the vehicle occupant (see 250b) will rebound off of the seat and move toward the steering wheel 202 (or instrument panel 230 or rear of the front seat 20). The forward motion of the vehicle occupant 250 relative to a forward positioned vehicle component (steering wheel, instrument panel, rear of the front seat) is sensed by one or more position sensors 300. These sensors can be ultrasonic, capacitive, high frequency radio wave, etc. The respective output signal from each sensor is communicated to a control unit 302 which generates an activation signal based upon, for example, the distance of the vehicle occupant to the component, to activate the inflator 204, causing the airbag 208 to deploy. This airbag activation signal is delayed relative to the time of the rear impact with or against the intruding object (i.e. moving second vehicle impact, a stationary second vehicle, a stationary tree or pole or the like).

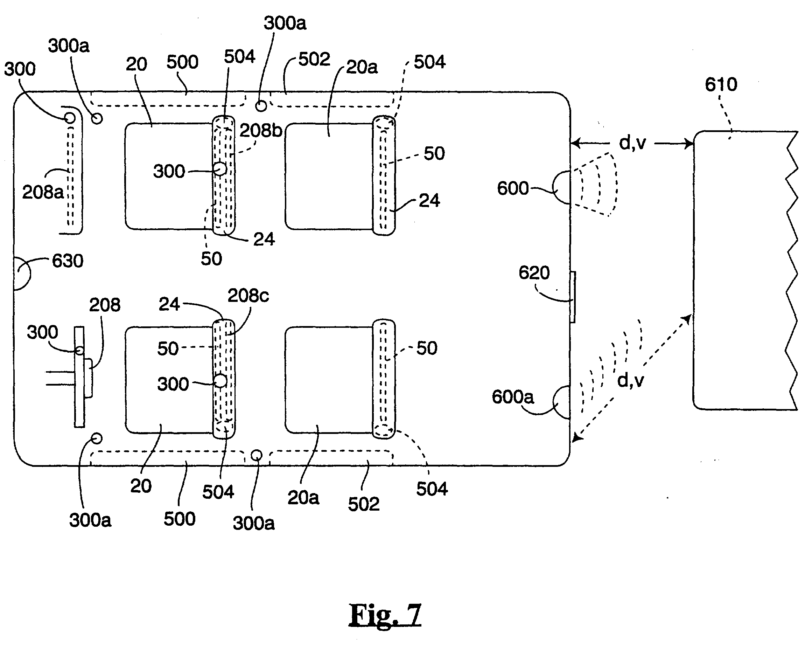

For example, if the vehicle occupant is determined to be within a threshold distance from the sensor (which may be located at or near the interior component) the airbag 208 (or other corresponding airbag) will be activated. The sensors 300 can be located within the passenger compartment to monitor the actual trajectory of the vehicle occupant. As an example, if an oblique rear impact occurs, the vehicle occupant may be thrown at an angle relative to the sides (and front) of the vehicle, rather than forward. In this case, the controller 302 would generate a signal that would activate the side impact or side curtain to thereby prevent the vehicle occupant from impacting the vehicle side door, window, etc. These other airbags are shown in FIG. 7.

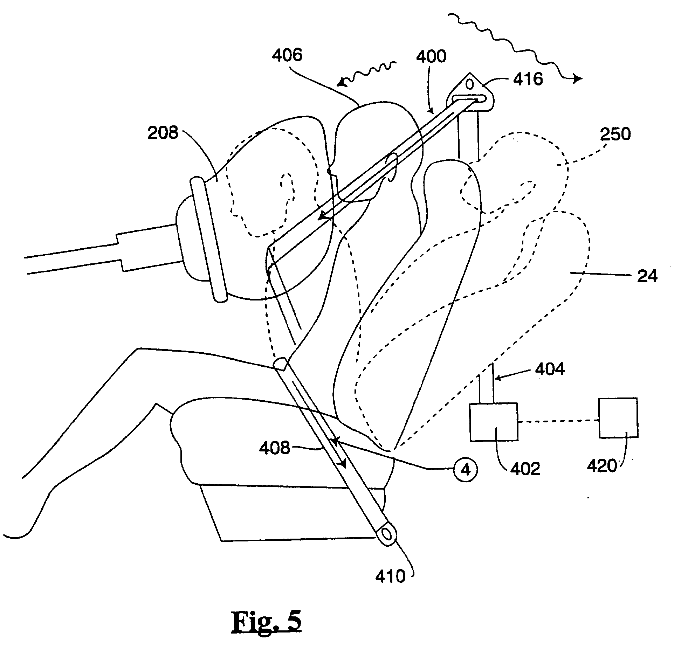

FIG. 5 depicts a rear impact crash with the vehicle occupant 250 protected by a seat belt system 400 which is also shown in FIG. 1. The typical seat belt system comprises a retractor 402 and a length of seat belt webbing 404 divided into a shoulder belt 406 and a lap belt 408. A conventional anchor anchors the lap belt to the floor. The demarcation between the shoulder belt and lap belt is often defined by a tongue 412 which is inserted within a seat belt buckle 414 (also anchored by an appropriate anchor mechanism 410). The buckle may include a buckle switch 415, which generates a signal to indicate that the tongue has been properly inserted within the buckle. A web guide 416 supports the shoulder belt 406. As is known in the art, the seat belt system can be incorporated within the back 24 of the seat or as illustrated exterior thereto.

Also illustrated in FIG. 1 are additional components of a "smart or active seat belt system." These components would include one or the other of a retractor pretensioner 420 and a buckle pretensioner 422. As is known in the art, upon the sensing of a crash, the retractor pretensioner is activated to reverse wind the spool of the retractor 402, thereby eliminating slack about the vehicle occupant. In addition, the operation of a buckle pretensioner 422 when activated pulls the buckle downwardly to remove slack about the vehicle occupant. In the context of a rear impact crash, upon sensing such crash and the inherent rearward vehicle occupant motion, the pretensioner 420, 422 would be activated thereby tightening the shoulder belt 406 and/or lap belt 408 about the vehicle occupant preventing the vehicle occupant from rebounding off of the seat 20. Retractors used today may include the conventional type of retractor in which the seat belt 404 is wound about a spool, the spool being placed in a locked configuration by the operation of a vehicle or web sensor. There is also an energy absorbing type of seat belt retractor as enumerated in US 5 626 306, US 5 785 269 and US 5 799 893 which are incorporated herein by reference. These energy absorbing seat belt retractors permit the vehicle occupant to move forward but in a controlled manner based upon the energy dissipation characteristics of the retractor 402. An energy absorbing retractor couples the retractor spool to a crush bushing or torsion bar. These energy-absorbing elements generate a reaction force as they are deformed. As the torsion bar is twisted or the bushing deformed, the spool is permitted to rotate and in so doing permits the seat belt to be controllably protracted in opposition to the reaction force (or torque). Energy absorbing retractors have been designed to provide one or more levels or reactive force. The appropriate level can be selected in correspondence with the energy level of the crash and the size of the vehicle occupant. Similarly, the forward motion of the vehicle occupant can be controlled incorporating an energy absorbing mechanism in either the buckle pretensioner 422 or the retractor pretensioner 420. This construction is also known in the art.

The following describes the control method used for a belted vehicle occupant as illustrated in FIG. 5. Upon sensing the magnitude of the rear impact crash, the pretensioner 420, 422 may be activated, if the crash is sufficiently severe, thereby tightening the belt about the vehicle occupant. Alternatively, if the pretensioners or retractor 402 are of the energy absorbing variety, the appropriate level of energy absorption is selected and the vehicle occupant will be permitted to rebound or move forward off from the seat, however, in a controlled manner at one or more levels of restraining force dependent on the design of the retractor, vehicle occupant size, and control system. Further, if the vehicle is involved in a severe rear impact crash, the rebound energy may be of such a level that the vehicle occupant will move forward so that he or she is placed precariously close to a vehicle component (steering wheel, instrument panel, rear of the front seat, or side of the vehicle). In this situation, the control system would selectively energize one (or more) of the airbags (208, 208a, etc.) to prevent injury to the vehicle occupant. In FIG. 5, the driver side airbag 208 has been energized based upon a measurement of the vehicle occupant's position relative to a forward position sensor 300. The rear protection airbag 50 can be activated prior to the vehicle occupant impacting the seat back or to catch the vehicle occupant after rebounding from the frontal airbag.

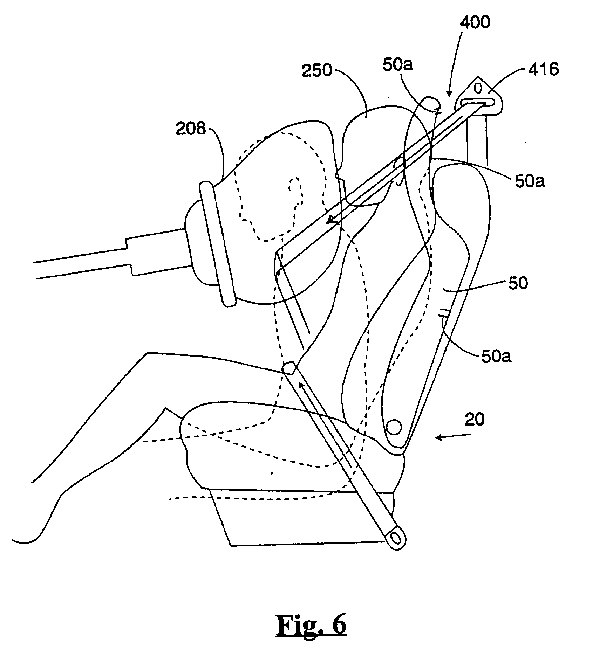

FIG. 6 shows a further embodiment of the present invention. In this embodiment the vehicle occupant is seated on a seat 20 that includes a rear protection airbag 50. In response to the sensing of an impending rear impact, or the actual rear impact, the airbag is deployed to cushion the rearward motion of the vehicle occupant lessening the potential of injury. The airbag may have one or more vents 50a to permit the airbag to be selectively vented. Any subsequent forward motion of the vehicle occupant would be absorbed by the seat belt system 400. If the sensor 300 determined that the vehicle occupant was moving too close to a vehicle component one of the airbag systems, frontal or side, can be activated.

FIG. 7 shows a top view of a typical vehicle compartment 550 having two front seats 20 and two rear seating positions 20a. The locations of the various frontal airbags are also shown. Any corresponding knee protection airbag is not shown. The vehicle may also be equipped with one or more right or left-hand side curtain airbags 500, 502 positioned on either side of the vehicle. These side curtain airbags are typically installed proximate the roof rail of the vehicle. Upon deployment the curtain airbag deploys downward to extend across the windows (and B or C pillar) of the vehicle to protect the shoulder and head of the vehicle occupant. One long side curtain airbag can replace the separate airbags 500, 502. Also diagrammatically illustrated is the location of a seat-integrated side impact system 504 that would include an inflator and an inflatable airbag. Side impact protection airbags can also be located in the vehicle's doors (not shown).

Located in the rear of the vehicle is a rearward-looking pre-impact predictive rear impact sensor 600 (or second sensor 600a). These sensors may employ microwave, radar, sonar or light-wave technology. The purpose of this sensor 600 or 600a is to detect the distance d, closing velocity v and angle of approach between the occupied vehicle and another vehicle 610 (or a stationary object such as a vehicle, pole or tree). Based upon the distance, closing speed and approach angle, the control unit 302 can determine whether or not the approaching object 610 will impact the occupied vehicle directly from behind or at an oblique angle. This information may be used in a predictive manner. That is, if a threshold is reached in which the distance d is sufficiently small in comparison to the closing velocity v, the activation of various of the airbags and/or seat belt related components is based upon the predicted trajectory (forward or oblique motion) of the seated vehicle occupant.

Also situated at the rear of the vehicle is an impact sensor 620 that may be secured to the vehicle's bumper. This impact sensor can be used in conjunction with the predictive sensor 600 and act as a firing or verification sensor that is used to activate the safety components when a crash occurs. The system can first be armed when the relative acceleration between the occupied vehicle and the object is in the range of 3 - 10g. The impact sensor will act as a firing sensor when a crash occurs.

It is not necessary to utilize active vehicle occupant position sensing to achieve the present invention. As an example, the system can utilize the impact sensor 620 to measure the change in vehicle acceleration (or deceleration) as a result of a rear impact. Further, the each seat 20 can be equipped with a vehicle occupant weight sensor 650, see for example FIG. 2. Based upon empirical data for a particular vehicle and seat construction, the rebound acceleration of a family of different sized vehicle occupants can be stored in the control unit 302. Based on the vehicle occupant size, and location in a particular seat 20, 20a, and determinable change in vehicle acceleration, the rebound acceleration is used to calculate the time to impact with an associated vehicle component. The appropriate airbag is subsequently activated to protect the rebounding vehicle occupant.

In the foregoing discussion of FIG. 6, the rear protection airbag 50 is deployed prior to the activation of the frontal or other airbag. In an alternate embodiment, the rear protection airbag is not initially deployed. In this scenario, the vehicle occupant is permitted to rebound off of the seat 20, 20a and then move forward into the protective frontal airbag 208 (208a, 208b, etc). If the energy of the crash is sufficient to cause the vehicle occupant to rebound off of the frontal airbag the rear protection airbag is then activated.

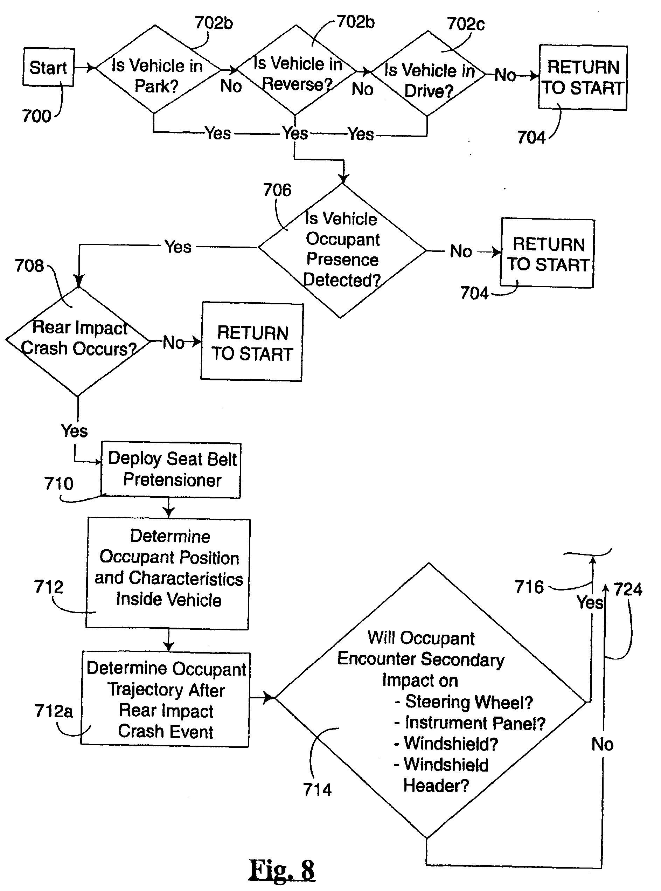

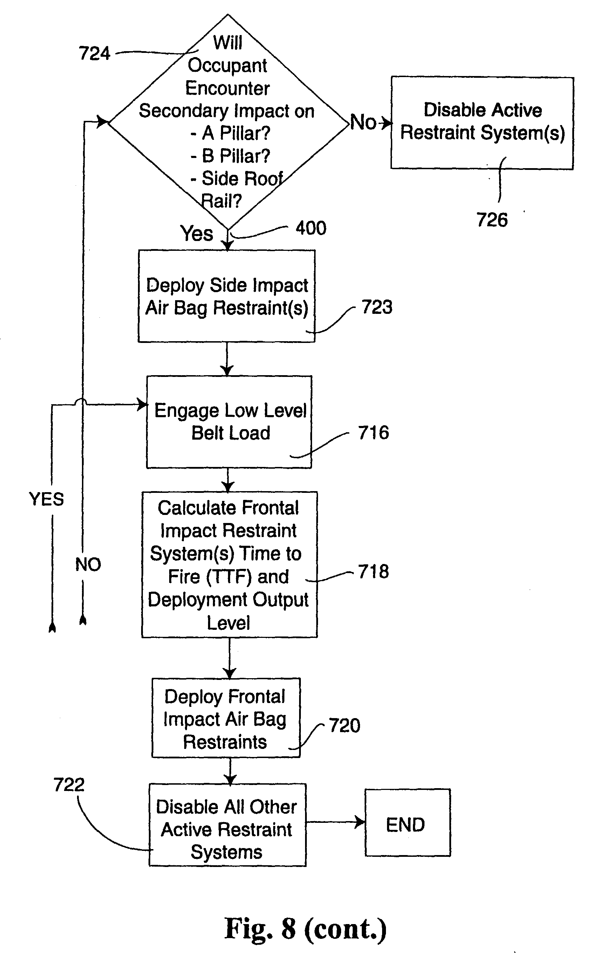

Reference is made to FIGS. 8, 9 and 10 which illustrate various controls and actuation algorithms that may be used with the present invention. FIG. 8 illustrates a control algorithm that may be used with a baseline seat, that is, one that does not include a seat back restraint 50. In this scenario, during a rear impact crash, the vehicle occupant will rebound off the seat forward or at an angle and be protected during this rebound by other safety restraint devices such as frontal and side impact airbags. The algorithm begins with block 700. Thereafter, the determination is made whether or not the vehicle, equipped with an automatic transmission in this example, is in park, in reverse or in drive in blocks 702a, b and c. If the answer is no, the algorithm is not started (block 704) and the algorithm control returns to block 700. If, however, the vehicle is in park, in reverse or in drive, the various vehicle occupant sensors 300, 300a, 650 are tested to determine if a vehicle occupant is present in the vehicle (block 706) . If there are no occupants in the vehicle the algorithm returns to block 700. If there are occupants in the vehicle, the algorithm interrogates the rear impact sensor 600, 600a, 620 to determine whether or not there is an impending or actual rear impact crash (block 708).

Inherent in block 708 is a determination of the speed of the occupied vehicle, determination of the distance between the occupied vehicle and the closing object and the closing speed between the occupied vehicle and the object. Thereafter, if the vehicle is equipped with seat belt pretensioners, those pretensioners will be activated (block 710) to eliminate belt slack. During a rear impact crash the vehicle occupant will be moved against the resilient seat and may tend to rebound from the seat if the impact is severe. The algorithm thereafter determines the initial position and trajectory of the vehicle occupant (block 712a). As a result of the rebound the algorithm makes a determination as to whether or not the vehicle occupant will impact a component of the vehicle such as the steering wheel, instrument panel, windshield, windshield header or rear of the front seats (block 714) . If the vehicle occupant will encounter a vehicle component and if the seat belt system 400 is equipped with load limiting hardware (retractor or pretensioner), the system will activate (block 716) the retractor at a load limit value that is appropriate to the crash severity, vehicle occupant size and position. If the vehicle is not equipped with load limiting hardware, the algorithm bypasses block 716 and enters block 718. Thereafter, based upon the determination of vehicle occupant's trajectory, the distance between the vehicle occupant and the frontal restraint system(s), the system 10 will calculate the needed time to deploy the frontal airbag and the desired deployment speed of the frontal airbags (block 713).

It is assumed here that one or more of the inflators 208 can produce inflation gas at determinable levels, that is, the inflator is of the type called a multi-level inflator. Thereafter, the airbags will be deployed (block 720). Subsequently, (block 722) the system will disable all other active restraint components which terminates the algorithm. If, based on the trajectory determinations (blocks 712 and 714) the vehicle occupant will not encounter frontally vehicle component the system tests to see if the vehicle occupant will move at an angle and encounter on the rebound a vehicle component, such as an A, B or C-pillar or the side roof rail of the vehicle, laterally (block 724) . If this is not the case, the restraint system algorithm is deactivated (block 726) . If it is determined that the vehicle occupant will encounter a vehicle component laterally one or more of the side impact airbags are activated (block 728).

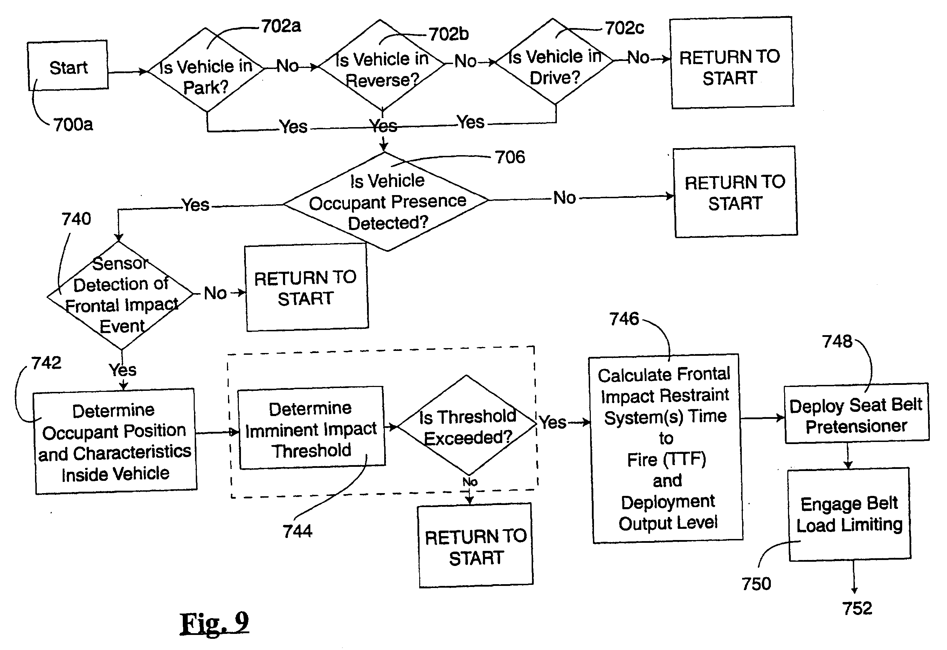

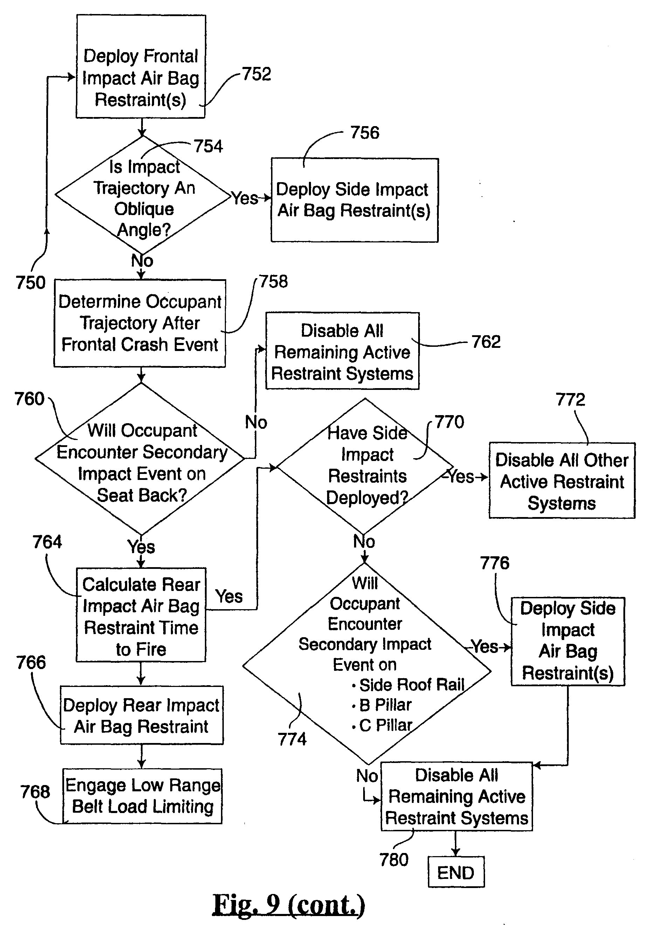

FIG. 9 shows a control and actuation algorithm for the scenario in which the vehicle is involved in a frontal crash causing one or more of the frontal airbags to deploy. Thereafter, the vehicle occupant's trajectory is monitored so that the vehicle occupant is protected during this rebound by a seat-mounted rear protection airbag 50. The initial steps in this algorithm involving blocks 702a and 706 are identical to that described above. If block 706 determines that the vehicle is occupied, the system determines if a front impact sensor 630 (block 740) is active (which indicates an actual or impending crash). If this is not the case, the algorithm returns to the start block 700a. If the frontal crash sensor determines that a frontal crash is in progress or about to occur, the algorithm, in response to the various vehicle occupant sensor inputs, determines the vehicle occupant position within the vehicle (block 742). If the frontal impact is above a predetermined threshold (block 744) and if the threshold is not exceeded, the algorithm stops and returns to the start block 700a. If the threshold is exceeded, the system determines, based on vehicle occupant position, the optimal time to fire the frontal airbags (block 746). Thereafter, if the vehicle is equipped with pretensioners, the pretensioners 420, 422 are activated to eliminate seat belt slack. If the vehicle is equipped with load limiting components, those load limiting components are then activated subsequent to the elimination of belt slack to permit the vehicle occupant to move forward in a controlled manner (block 750). Thereafter, the frontal airbags are activated (block 752).

Based upon sensors such as a plurality of accelerometers, or forward-looking radar or ultrasonic sensors 630, a determination can be made as to whether or not the impact is a true frontal impact or at an oblique angle (block 754). This step can be used to arm the airbag that will be subsequently activated. If the impact is at an oblique angle, in addition to activating the front airbags, one or more of the side impact airbag restraints (block 756) is activated. The algorithm then determines, based upon vehicle occupant sensor position data, the projected trajectory of the vehicle occupant after the frontal crash (block 758). Based upon the projected trajectory, the algorithm determines whether or not the vehicle occupant will encounter a secondary impact or rebound with the seat back (block 760) by monitoring vehicle occupant position.

The vehicle occupant's position is not absolutely needed because a gross determination to fire the side airbags can be made when the severity of the crash is above a threshold level and above a threshold oblique angle. If the vehicle occupant will not experience a secondary impact after a frontal impact, the system is disabled (block 762). If it is determined that the rebound is significant, the algorithm determines the time to deploy the rear seat airbag 50 (block 764). Thereafter, the rear seat airbag is activated (block 766) to cushion the impact of the vehicle occupant. To prevent the vehicle occupant from rebounding from the seat and if the vehicle is so equipped, the load limiting components of the seat belt system (block 768) remain activated or can be switched to another level of load limiting.

Referring again to block 764, in addition to calculating the deployment time for the rear seat airbag 50, a determination is made whether or not the side impact restraints have been deployed (as they may have been in block 756). If the side impact restraints have been deployed the algorithm terminates in block 772. If the side impact airbags have not been deployed (block 774) and the projected trajectory of the vehicle occupant indicates that the vehicle occupant may laterally impact one or more components in the vehicle, the appropriate side impact airbag will be deployed (block 776) . If the vehicle occupant, during the rebound, is determined not to be in danger of laterally impacting a vehicle component the algorithm is terminated in block 780.

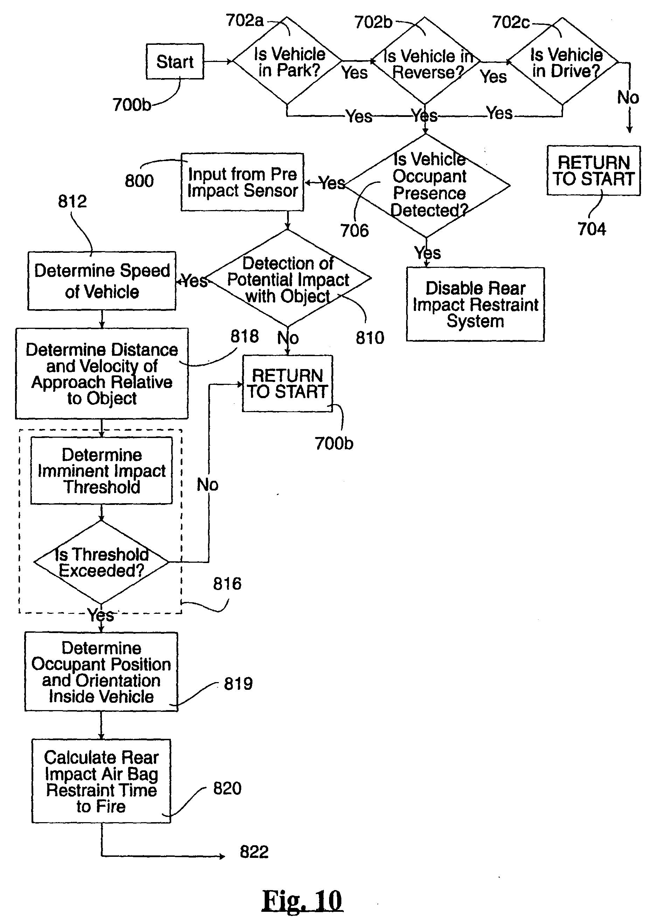

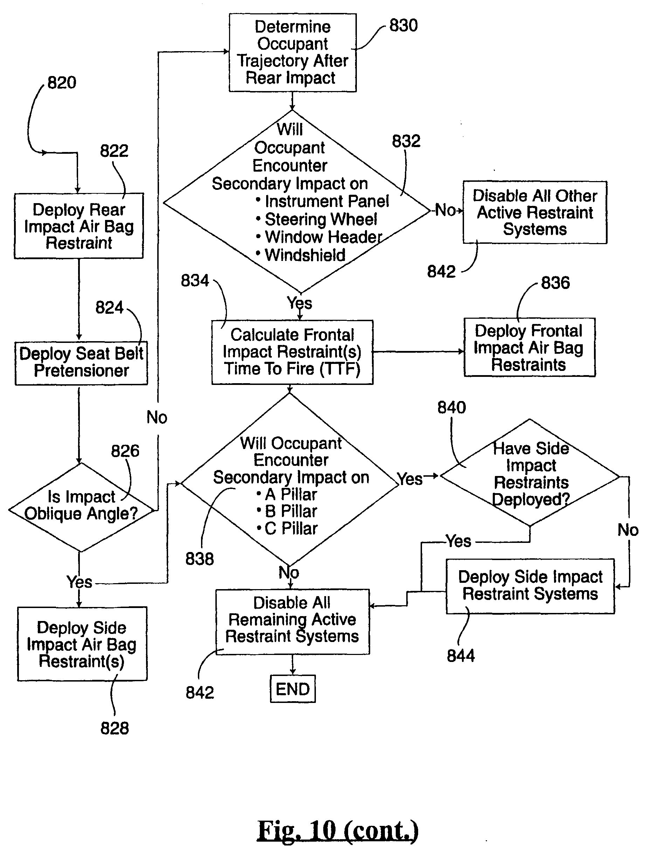

FIG. 10 shows the operation of the present invention for a system having a rear protection airbag 50 and rearward looking pre-impact sensors 600, 600a. FIG. 10 diverges from FIG. 8 in which the output of the pre-impact sensors 600, 600a are obtained and then a determination is made as to the probability of having an impact with an object (block 810). If there is no such probability the algorithm returns to the beginning (block 700b). The determination of whether or not there will be a crash utilizes the steps of determining the speed of the occupied vehicle 812 which can be obtained from the vehicle speedometer, transmission or wheel speed sensors which are part of, for example, an adaptive braking system. Thereafter, the output of the pre-impact sensors 600, 600a is utilized to define at least (block 818) the relative velocity and closing distance between the occupied vehicle and the other object. The relative velocity can be differentiated to provide an indication of the relative acceleration between the occupied vehicle and the other object. Thereafter, a determination is made (block 816) to see whether or not a crash is likely to occur. In the context of block 816, the system determines whether or not threshold criteria have been exceeded. Thereafter, the vehicle occupant's position is determined within the vehicle (block 818) . Based upon the relative information between the occupied vehicle and the object, the system anticipates when the rear impact crash will occur based upon the distance, velocity and acceleration and calculates the time at which the rear protection airbag 50 should be deployed (block 820) . Subsequently, the crash occurs and the rear protection airbag is deployed (block 822) and the vehicle occupant will move rearward. There may be situations in which the deployment of the rear protection airbag 50 should be delayed in relation to the rear impact. If prior to the rear impact the occupied vehicle is rapidly decelerated, such as by applying the brakes, the vehicle occupants will tend to move forward, that is, away from the back of the seat and be in a non-normal (out-of-position) position. In this situation, the deployment of the rear protection airbag 50 can be delayed until the vehicle occupant moves back into the seat back. This can be achieved by monitoring vehicle occupant position relative to the seat and when the vehicle occupant has returned to the normal seating position with his back against the seat back or within a determinable range of the seat back, the rear protection airbag is deployed. The system will then cause the seat belt to be tightened about the vehicle occupant (block 824) such as by activating a retractor or buckle pretensioner, thereby tending to hold the vehicle occupant onto the seat. If it is determined that a rear impact crash has occurred at an oblique angle (block 826), and that it is more probable that the vehicle occupant could rebound at an angle off of the seat, various side impact protection components can be activated (block 828). If a determination is made (block 826) that a rear impact crash will not occur at an oblique angle, the vehicle occupant's rebounding action is determined (block 830) to see whether or not the energy of the crash will propel the vehicle occupant forward and secondarily impact head on a component in the vehicle (block 832). If there is the possibility that the crash energy might cause the vehicle occupant to move sufficiently forward, the system continues to monitor the vehicle occupant's trajectory and calculates a preferred time to deploy one or more of the frontal airbags (block 834). Thereafter, the frontal airbags are deployed (block 836). It may be possible that the side impact safety components are not yet activated as a result of the steps shown in block 826, but that the vehicle occupant will rebound from the frontal airbag at an angle. If this is the case the system continues to process the vehicle occupant's position to see if the rebounding vehicle occupant may laterally impact a component of the vehicle (block 838). If that determination is positive, the system again checks to see if the side impact safety component had previously been activated (block 840). In this case all other previously unused and active restraint components are disabled (block 842). If, however, the appropriate side impact restraint had not previously been activated and if the vehicle occupant's trajectory is tending to move the vehicle occupant in the direction of a side of the vehicle, the appropriate side impact restraint is activated (block 844).

## Claims

1. A system for protecting a vehicle occupant in a rear impact crash characterised by:
a first means (600, 620, 630) for detecting one of an impending or actual rear vehicular impact;
a second means (300) for determining the position of the vehicle occupant subsequent to the rear impact in relation to defined parts of a passenger compartment;
an inflatable means (204, 208) for providing an inflatable protective restraint for the vehicle occupant in response to the position of the vehicle occupant; and
a control means (302) for generating a control signal to activate the inflatable means.

2. A system for protecting a vehicle occupant in a rear impact crash as defined in Claim 1 further characterised by the first means including a predictive rear impact sensor (600).

3. A system for protecting a vehicle occupant in a rear impact crash as defined in Claim 1 further characterised by the first means further including a sensor (620) for generating a signal indicative of an actual rear impact.

4. A system for protecting a vehicle occupant in a rear impact crash as defined in Claim 1 further characterised by the predictive rear impact sensor (600) including means for generating a signal indicative of the distance and relative velocity between the occupied vehicle and a rearward object.

5. A system for protecting a vehicle occupant in a rear impact crash as defined in Claim 4 further characterised by the rear impact sensor (600, 620, 630) including means for determining the relative angle between the occupied vehicle and the object.

6. A system for protecting a vehicle occupant in a rear impact crash as defined in Claim 1 further characterised by the inflatable means including at least one frontal impact airbag system (208, 208a).

7. A system for protecting a vehicle occupant in a rear impact crash as defined in Claim 1 further characterised by the inflatable means including at least one side impact airbag system (500, 502, 504).
